(19) Europäisches Patentamt / European Patent Office / Office européen des brevets

(11) **EP 2 445 288 B1**

(12) **EUROPEAN PATENT SPECIFICATION**

(45) Date of publication and mention of the grant of the patent:
**01.01.2020 Bulletin 2020/01**

(21) Application number: **10788689.7**

(22) Date of filing: **19.04.2010**

(51) Int Cl.:
*H04W 72/04* (2009.01)    *H04B 7/04* (2017.01)
*H04L 25/02* (2006.01)    *H04L 5/00* (2006.01)
*H04B 7/06* (2006.01)

(86) International application number:
**PCT/CN2010/071880**

(87) International publication number:
**WO 2010/145293 (23.12.2010 Gazette 2010/51)**

(54) **METHOD AND APPARATUS FOR OBTAINING CHANNEL STATE INFORMATION**

VERFAHREN UND VORRICHTUNG ZUM ERHALTEN VON KANALSTATUSINFORMATIONEN

PROCÉDÉ ET APPAREIL POUR OBTENTION D'INFORMATIONS D'ÉTAT DE CANAL

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **19.06.2009 CN 200910087393**

(43) Date of publication of application:
**25.04.2012 Bulletin 2012/17**

(73) Proprietor: **Huawei Technologies Co., Ltd.**
**Longgang District**
**Shenzhen, Guangdong 518129 (CN)**

(72) Inventors:
• **XIA, Liang**
**Shenzhen**
**Guangdong 518129 (CN)**
• **ZHOU, Yongxing**
**Shenzhen**
**Guangdong 518129 (CN)**
• **ZHAO, Yajun**
**Shenzhen**
**Guangdong 518129 (CN)**
• **CHENG, Xingqing**
**Shenzhen**
**Guangdong 518129 (CN)**
• **REN, Xiaotao**
**Shenzhen**
**Guangdong 518129 (CN)**
• **WANG, Yan**
**Shenzhen**
**Guangdong 518129 (CN)**

(74) Representative: **Pfenning, Meinig & Partner mbB**
**Patent- und Rechtsanwälte**
**Theresienhöhe 11a**
**80339 München (DE)**

(56) References cited:
CN-A- 101 087 166    CN-A- 101 330 357
US-A1- 2004 208 145    US-A1- 2005 020 237
US-A1- 2005 041 750    US-A1- 2006 013 250
US-A1- 2008 232 503

**Description**

**FIELD OF THE INVENTION**

The present invention relates to the field of communications technologies, and in particular, to a method and an apparatus for obtaining channel state information.

**BACKGROUND OF THE INVENTION**

The Multiple-User Multiple-Input Multiple-Output (Multiple-User Multiple-Input Multiple-Output, MU-MIMO for short) technology enables an Access Point (Access Point, AP for short) with the multi-antenna function to serve multiple User Equipments (User Equipment, UE for short) on the same time-frequency resources. An UE also has the multi-antenna function. For a MU-MIMO system, accurate feedback of the downlink channel state information becomes more important. Higher feedback overheads are generally required to provide accurate channel state information.

In a single-point transmission system, an AP transmits a downlink reference signal to a UE; the UE receives the reference signal, obtains state information of a channel between the UE and the AP (single point) through calculation, and feeds back the calculated channel state information to the AP, thereby finishing a measurement procedure of the downlink channel. In a multi-point transmission system, multiple APs transmit downlink reference signals to the UE; the UE receives the reference signals from the multiple APs, then obtains state information of channels between the UE and the multiple APs through calculation, and feeds back the multiple pieces of calculated channel state information to the multiple APs respectively, thereby finishing a measurement procedure of the downlink channels. Compared with the single-point transmission system, the feedback amount from the UE in a multi-point communication system is expanded from the state information of the channel between the UE and an AP to the state information of the channels between the UE and multiple APs.

The UE feeds back the downlink channel matrix, the eigenelements of the downlink channel matrix, the covariance matrix of the downlink channel matrix, or the eigenelements of the covariance matrix to the AP directly, so feedback overheads of the downlink channel state information to be fed back requires are massive.

US 2006/0013250 A1 describes a unified MIMO system that supports multiple operating modes for efficient data transmission, Each operating mode is associated with different spatial processing at a transmitting entity.

US 2004/0208145 A1 describes a method of data communication between two transceivers in a multiple-input multiple-output radio communication system, wherein a first transceiver simultaneously transmits one or more data symbols corresponding to a single data stream over a plurality of transmit antennas and a second transceiver receives the data symbols through a plurality of receive antennas.

US 2005/0020237 A1 describes a method for transmitting signals from a transmitter comprising two or more antennas in mobile telecommunications network. The method involves determining channel state information, estimating the reliability of that channel state information and space time block encoding at least one data sequence.

**SUMMARY OF THE INVENTION**

The objects of the invention are solved by the method for obtaining channel state information according to claim 1 and the apparatus for obtaining channel state information according to claim 4. The respective dependent claims give advantageous developments of the method and apparatus according to the invention.

**BRIEF DESCRIPTION OF THE DRAWINGS**

To describe the technical solutions under the embodiments of the present invention more clearly, the following outlines the accompanying drawings involved in the embodiments. Apparently, the accompanying drawings outlined below are not exhaustive, and persons of ordinary skill in the art can derive other drawings from such accompanying drawings without any creative effort.

FIG. 1 is a schematic structure diagram of a coordinated multi-point transmission/reception system applied in an embodiment of the present invention;
FIG. 2 is a schematic flowchart of a method for obtaining channel state information according to an embodiment of the present invention;
FIG. 3 is a schematic flowchart of a method for obtaining channel state information according to another embodiment of the present invention;
FIG. 4 is a schematic diagram of a frequency domain change of matrix elements of a first channel state matrix $\overline{U}_{i,k}$

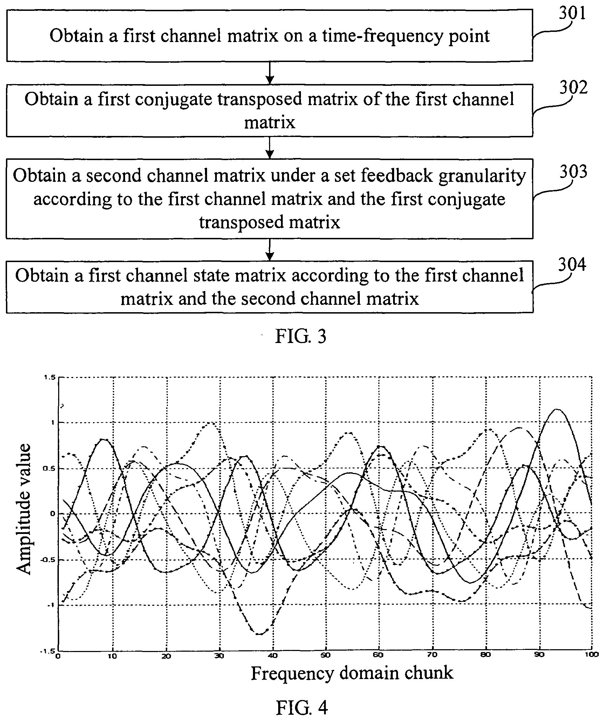

according to the embodiment shown in FIG 3;

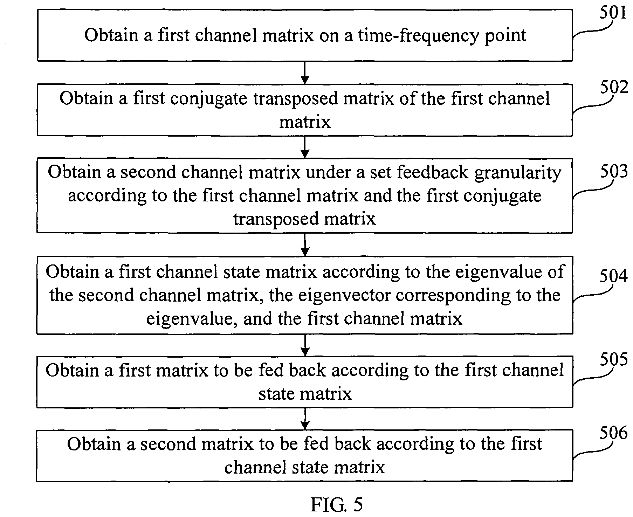

FIG. 5 is a schematic flowchart of a method for obtaining channel state information according to still another embodiment of the present invention;

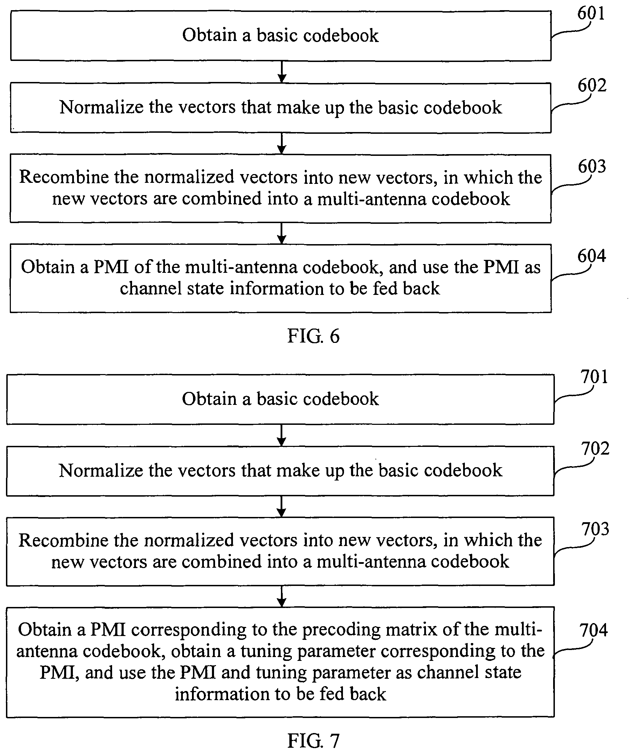

FIG. 6 is a schematic flowchart of a method for obtaining channel state information according to yet another embodiment of the present invention;

FIG. 7 is a schematic flowchart of a method for obtaining channel state information according to further another embodiment of the present invention;

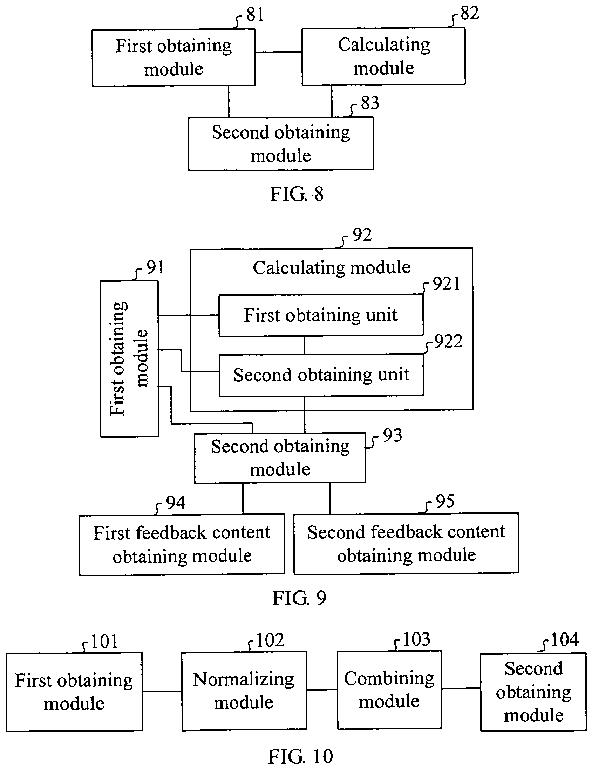

FIG. 8 is a schematic structure diagram of an apparatus for obtaining channel state information according to an embodiment of the present invention;

FIG 9 is a schematic structure diagram of an apparatus for obtaining channel state information according to another embodiment of the present invention;

FIG. 10 is a schematic structure diagram of an apparatus for obtaining channel state information according to still another embodiment of the present invention; and

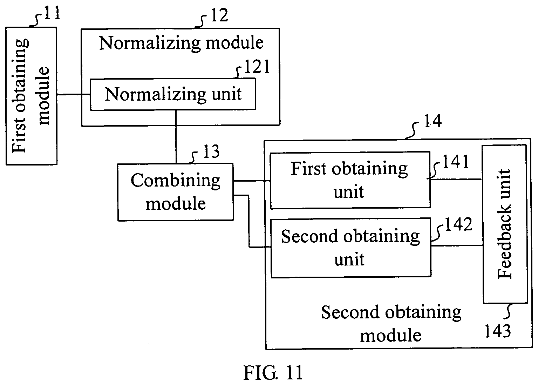

FIG 11 is a schematic structure diagram of an apparatus for obtaining channel state information according to yet another embodiment of the present invention.

## DETAILED DESCRIPTION OF THE EMBODIMENTS

The following detailed description is given with reference to the accompanying drawings to provide a thorough understanding of the technical solutions in the embodiments of the present invention. Evidently, the drawings and the detailed description are merely representative of particular embodiments of the present invention, and the embodiments are illustrative in nature and not exhaustive. All other embodiments, which can be derived by those of ordinary skill in the art from the embodiments given herein without any creative effort, shall fall within the protection scope of the present invention.

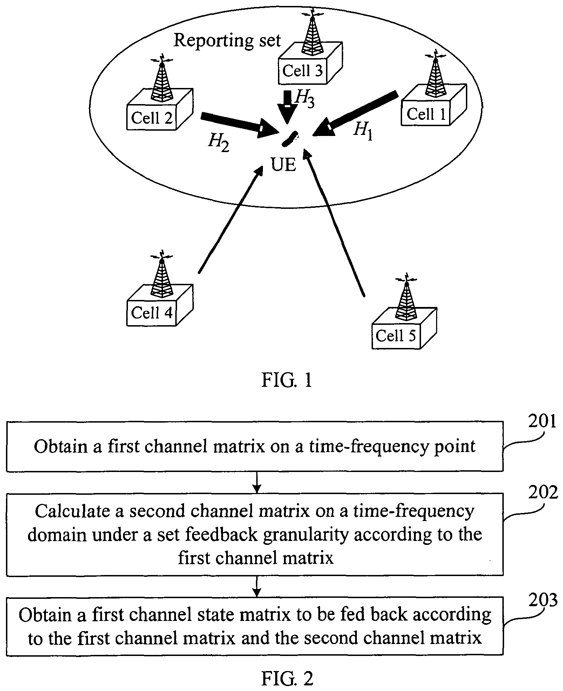

FIG. 1 is a schematic structure diagram of a coordinated multi-point transmission/reception system applied in an embodiment of the present invention. As shown in FIG. 1, the CoMP system includes cell (cell) 1, cell 2, cell 3, cell 4, cell 5, and a UE. Cell 1, cell 2, and cell 3 form a reporting cell set (reporting set) of the UE; cell 4 and cell 5 are interfering cells of the UE; the channel matrix $H_1$ between cell 1 and the UE, the channel matrix $H_2$ between cell 2 and the UE, and the channel matrix $H_3$ between cell 3 and the UE form multi-cell composite channel state information $H_{comp}$ =$[H_1\ H_2\ H_3]$. The UE needs to feed back the state information of the downlink channel between the cell and the UE in the reporting cell set. The channel state information is expressed by using the downlink channel matrix $H_{i,k}$, where i is a cell number, and k is a frequency domain identifier or a time domain identifier, and specifically, k may be a frame sequence number in the time domain or a carrier sequence number in the frequency domain.

FIG. 2 is a schematic flowchart of a method for obtaining channel state information according to an embodiment of the present invention. As shown in FIG. 2, the method in this embodiment includes the following steps:

Step 201: Obtain a first channel matrix on a time-frequency point.
Step 202: Calculate a second channel matrix on a time-frequency domain under a set feedback granularity according to the first channel matrix.
Step 203: Obtain a first channel state matrix to be fed back according to the first channel matrix and the second channel matrix.

The method for obtaining channel state information according to this embodiment of the present invention sets a great feedback granularity to reduce the feedback amount of the channel state information in view of the channel characteristics, and reduces the feedback overhead of the channel state information on the premises of ensuring feedback precision of the channel state information.

FIG 3 is a schematic flowchart of a method for obtaining channel state information according to another embodiment of the present invention. As shown in FIG. 3, the method in this embodiment includes the following steps:

Step 301: Obtain a first channel matrix on a time-frequency point.
Step 302: Obtain a first conjugate transposed matrix of the first channel matrix.
Step 303: Obtain a second channel matrix under a set feedback granularity according to the first channel matrix and the first conjugate transposed matrix.
Step 304: Obtain a first channel state matrix according to the first channel matrix and the second channel matrix.

In step 301 above, it is assumed that the channel matrix on the time-frequency point to be fed back obtained by a UE is the first channel matrix $H_{i,k}$, where i is a cell identifier, and k is a frequency domain identifier or a time domain identifier, and specifically, k is a frame sequence number in the time domain or a carrier sequence number in the frequency domain.

In step 302 above, the conjugate transposed matrix of the first channel matrix $H_{i,k}$ is obtained according to the first channel matrix $H_{i,k}$. For ease of description in this embodiment, the conjugate transposed matrix of the first channel matrix is called the first conjugate transposed matrix $H_{i,k}^{H}$.

In step 303, the second channel matrix $R_i$ on the time-frequency domain to be fed back is calculated according to the first channel matrix $H_{i,k}$. Specifically, the second channel matrix is

$$R_i = \frac{1}{M} \sum_{k=1}^{M} H_{i,k}^{H} H_{i,k}$$

where M is the feedback granularity of the frequency domain and the feedback granularity of the time domain, and a great feedback granularity M may be set according to the channel characteristics to reduce the feedback overhead. Supposing that the feedback granularity is M, the following matrix may also be used as the second channel matrix $R_i$: the channel covariance matrix on a time-frequency point after an interval of M time-frequency points; or the matrix formed by the weighted average value of the first channel matrix $H_{i,k}$ on a time-frequency point after an interval of M time-frequency points and the first conjugate transposed matrix $H_{i,k}^{H}$.

At intervals of M time-frequency points for the feedback granularity, the UE obtains the second channel matrix $R_i$ or obtains the eigenelement $\Sigma_{Ri}^{2}$ and eigenelement $V_{Ri}$ of the second channel matrix $R_i$ once. The eigenelement $\Sigma_{Ri}^{2}$ and the eigenelement $V_{Ri}$ fulfill

$$R_i = V_{Ri} \cdot \Sigma_{Ri}^{2} \cdot V_{Ri}^{H},$$

where the eigenelement $\Sigma_{Ri}^{2}$ is an eigenvalue of the second channel matrix $R_i$, and is a diagonal matrix composed of $N_T$ rows and $N_T$ columns. The matrix elements on the diagonal line of the eigenelement $\Sigma_{Ri}^{2}$ are arranged in a specific order according to the modulus value. Specifically, the matrix elements on the diagonal line of the eigenelement $\Sigma_{Ri}^{2}$ may be arranged in a descending order of modulus values. The eigenelement $V_{Ri}$ is a unitary matrix composed of $N_T$ rows and $N_T$ columns. The pth column p of eigenelement $V_{Ri}$ is the eigenvector corresponding to the pth element on the diagonal line of eigenelement $\Sigma_{Ri}^{2}$.

In step 304, according to the previous $N_{i,L}$ eigenvalues of the second channel matrix $R_i$, the eigenvectors corresponding to the $N_{i,L}$ eigenvalues, and the first channel matrix $H_{i,k}$ on the feedback time-frequency point, the UE calculates the first channel state matrix $\overline{U}_{i,k} = f(H_{i,k}, R_i)$ to be fed back, where $N_{i,L} \leq N_T$.

$$\overline{U}_{i,k} = H_{i,k} \cdot \begin{bmatrix} v_{Ri,1} & \cdots & v_{Ri,N_{i,L}} \end{bmatrix} \cdot \begin{bmatrix} \sigma_{Ri,1}^{2} & & \\ & \ddots & \\ & & \sigma_{Ri,N_{i,L}}^{2} \end{bmatrix}^{-\frac{1}{2}}$$

Specifically, the first channel state matrix is

where $vR_{i,L}$ is a vector in the Lth column of eigenelement $V_{Ri}$, $\sigma_{Ri,L}^{2}$ is the Lth matrix element on the diagonal line of eigenelement $\Sigma_{Ri}^{2}$, and the first channel state matrix $\overline{U}_{i,k}$ is a complex matrix composed of $N_R$ rows and $N_{i,L}$ columns. Therefore, for the purpose of feeding back the first channel state matrix $\overline{U}_{i,k}$ to the AP, the UE needs to feed back $2 \times N_R \times N_{i,L}$ real numbers. If the frequency domain granularity or time domain granularity of the first channel state matrix $\overline{U}_{i,k}$ fed back by the UE to the AP is N, $1 \leq N \leq M$ is fulfilled.

In this embodiment, $N_{i,L}$ is restricted by one of the following criteria:

$$(1) \quad \sigma^2_{Ri,N_{i,L}+1} < \varepsilon \text{, and } \sigma^2_{Ri,N_{i,L}} \geq \varepsilon \text{;}$$

$$(2) \quad \sigma^2_{Ri,N_{i,L}+1} / \sigma^2_{Ri,N_{i,L}} < \varepsilon \text{;}$$

$$(3) \quad \sigma^2_{Ri,N_{i,L}+1} < \varepsilon \sigma^2_{Ri,1} \text{, and } \sigma^2_{Ri,N_{i,L}} \geq \varepsilon \sigma^2_{Ri,1} \text{;}$$

and

$$(4) \quad g\left(H_{i,k}, f^{-1}\left(\overline{U}_{i,k}, R_i\right)\right) < \varepsilon$$

where $f^1(U_{i,k}, R_i)$ is a channel matrix recovered by using the second channel matrix $R_i$ and the first channel state matrix $\overline{U}_{i,k}$, and $g(H_{i,k}, f^1(\overline{U}_{i,k}, R_i))$ is the difference between matrix $H_{i,k}$ and $f^1(\overline{U}_{i,k}, R_i)$

In the four criteria above, $\varepsilon$ is a set threshold, and $\sigma^2_{Ri,L}$ is the Lth matrix element on the diagonal line of eigenelement $\Sigma^2_{Ri}$.

In this embodiment, the second channel matrix $R_i$ varies with the cell identifier i of the cell where the UE is located. When the cell identifier i changes (namely, the cell where the UE is located changes), the second channel matrix $R_i$ changes with the cell where the UE is located, and the matrix element $\sigma^2_{Ri,L}$ also changes with the change of the second channel matrix $R_i$. Therefore, the $N_{i,L}$ selected according to the matrix element $\sigma^2_{Ri,L}$ in view of the four criteria above also changes with the change of the second channel matrix $R_i$, so that the first channel state matrix $\overline{U}_{i,k}$ fed back by the UE to the AP also changes adaptively with the change of $N_{i,L}$, and the UE can reduce the overhead of feedback to the AP adaptively.

FIG. 4 is a schematic diagram of a frequency domain change of matrix elements of the first channel state matrix $\overline{U}_{i,k}$ according to the embodiment shown in FIG 3. As shown in FIG 4, the number of transmitting antennas is 4, and the spacing of the transmitting antennas is a half of the carrier wavelength; the number of receiving antennas is 2, and the spacing of the receiving antennas is a half of the carrier wavelength; each curve represents the amplitude value of the real part and the imaginary part of each matrix element of the first channel state matrix $\overline{U}_{i,k}$ of each receiving antenna on different frequency domain chunks(chunk); each chunk has 6 subcarriers(subcarrier); when the frequency domain feedback granularity M of the second channel matrix $R_i$ is equal to 100 chunks, the real part and the imaginary part of the matrix element of the first channel state matrix $\overline{U}_{i,k}$ (where k ranges from 1 to 100) of the UE change within the frequency domain. As shown in FIG. 4, the 8 curves change slowly, and the dynamic range is narrow. Therefore, if the first channel state matrix $\overline{U}_{i,k}$ is fed back in a quantization mode, the quantization overhead is reduced and the quantization precision is improved.

In this embodiment, when the feedback granularity M of the second channel matrix $R_i$ is far greater than the feedback granularity N of the first channel state matrix $\overline{U}_{i,k}$, the feedback amount of the second channel matrix $R_i$ is ignorable. The UE needs to feed back $2N_R N_{i,L}$ real numbers when feeding back the first channel state matrix $\overline{U}_{i,k}$ to the AP, thereby reducing the feedback overhead by $(1-N_{i,L}/N_T) \times 100\%$ in contrast to the $2N_R N_T$ real numbers to be fed back when feeding back the channel matrix $H_i$ to the AP directly in the prior art. In this embodiment, if $N_{i,L} = 2$ and $N_T = 4$, the overhead of feedback from the UE to the AP decreases by 50%. Moreover, in the embodiment of the present invention, according to the channel characteristics, a great feedback granularity M and a great feedback granularity N may be selected to reduce the feedback amount and reduce the feedback overhead of the channel state information on the premise of ensuring feedback precision of the channel state information.

In the embodiment shown in FIG. 3, after the UE feeds back the first channel state matrix $\overline{U}_{i,k} = f(H_{i,k}, R_i)$ and the second channel matrix $R_i$ to the AP, the AP calculates the channel matrix $\overline{H}_{i,k} = f^{-1}(\overline{U}_{i,k}, R_i)$ through inverse calculation of step 304 according the received first channel state matrix $\overline{U}_{i,k} = f(H_{i,k}, R_i)$ and second channel matrix $R_i$. In this embodiment, the AP may obtain the channel matrix $\overline{H}_{i,k}$ according to

$$\overline{H}_{i,k} = \overline{U}_{i,k} \cdot \begin{bmatrix} \sigma^2_{Ri,1} & & \\ & \ddots & \\ & & \sigma^2_{Ri,N_{i,L}} \end{bmatrix}^{\frac{1}{2}} \cdot \begin{bmatrix} v_{Ri,1} & \cdots & v_{Ri,N_{i,L}} \end{bmatrix}^{H}$$

, where the channel matrix $\overline{H}_{ik}$ is the downlink channel matrix on the time-frequency domain identified by k and is obtained by the ith AP; and the inverse matrix of $[v_{Ri,1}\cdots v_{Ri,N_{i,L}}]$ is replaced with $[v_{Ri,1}\cdots v_{Ri,N_{i,L}}]^{H}$.

FIG. 5 is a schematic flowchart of a method for obtaining channel state information in still another embodiment of the present invention. As shown in FIG 5, the method in this embodiment includes the following steps:

Step 501: Obtain a first channel matrix on a time-frequency point.
Step 502: Obtain a first conjugate transposed matrix of the first channel matrix.
Step 503: Obtain a second channel matrix under a set feedback granularity according to the first channel matrix and the first conjugate transposed matrix.
Step 504: Obtain a first channel state matrix according to the eigenvalue of the second channel matrix, the eigenvector corresponding to the eigenvalue, and the first channel matrix.
Step 505: Obtain a first channel matrix to be fed back according to the first channel state matrix.
Step 506: Obtain a second channel matrix to be fed back according to the first channel state matrix.

In step 501 above, it is assumed that the channel matrix on the time-frequency point to be fed back obtained by the UE is the first channel matrix $H_{i,k}$, where i is a cell identifier, and k is a frequency domain identifier or a time domain identifier, and specifically, k is a frame sequence number in the time domain or a carrier sequence number in the frequency domain.

In step 502 above, the first conjugate transposed matrix $H^{H}_{i,k}$ of the first channel matrix $H_{i,k}$ is obtained according to the first channel matrix $H_{i,k}$.

In step 503, the second channel matrix $R_i$ on the time-frequency domain to be fed back is calculated according

$$R_i = \frac{1}{M} \sum_{k=1}^{M} H^{H}_{i,k} H_{i,k}$$

to the first channel matrix $H_{i,k}$. Specifically, the second channel matrix is , where M is the feedback granularity of the frequency domain and time domain, and a great feedback granularity M may be set according to the channel characteristics to reduce the feedback overhead. Supposing that the feedback granularity is M, the following matrix may be used as the second channel matrix $R_i$: the channel covariance matrix on a time-frequency point after an interval of M time-frequency points; or the matrix formed by the weighted average value of the first channel matrix $H_{i,k}$ on a time-frequency point after an interval of M time-frequency points and the first conjugate transposed matrix $H^{H}_{i,k}$.

At intervals of M time-frequency points for the feedback granularity, the UE obtains the second channel matrix $R_i$ or obtains the eigenelement $\Sigma^2_{Ri}$ and eigenelement $V_{Ri}$ of the second channel matrix $R_i$. The eigenelement $\Sigma^2_{Ri}$ and the eigenelement $V_{Ri}$ fulfill $R_i = V_{Ri} \cdot \Sigma^2_{Ri} \cdot V^{H}_{Ri}$, where the eigenelement $\Sigma^2_{Ri}$ is an eigenvalue of $R_i$, and is a diagonal matrix composed of $N_T$ rows and $N_T$ columns. The matrix elements on the diagonal line of the eigenelement $\Sigma^2_{Ri}$ are arranged in a specific order according to the modulus value. Specifically, the matrix elements on the diagonal line of the eigenelement $\Sigma^2_{Ri}$ may be arranged in a descending order of modulus values. The eigenelement $V_{Ri}$ is a unitary matrix composed of $N_T$ rows and $N_T$ columns. The pth column of eigenelement $V_{Ri}$ is the eigenvector corresponding to the pth element on the diagonal line of eigenelement $\Sigma^2_{Ri}$.

In step 504, the first channel state matrix $\overline{U}_{i,k}$ is obtained according to the eigenvalue of the second channel matrix $R_i$, the eigenvector corresponding to the eigenvalue, and the first channel matrix $H_{i,k}$. Specifically, the first channel

$$\overline{U}_{i,k} = H_{i,k} \cdot \begin{bmatrix} v_{Ri,1} & \cdots & v_{Ri,N_{i,L}} \end{bmatrix} \cdot \begin{bmatrix} \sigma^2_{Ri,1} & & \\ & \ddots & \\ & & \sigma^2_{Ri,N_{i,L}} \end{bmatrix}^{-\frac{1}{2}},$$

state matrix $\overline{U}_{i,k} = f(H_{i,k}, R_i)$ can be obtained according to

where $v_{Ri,L}$ is a vector in the Lth column of $V_{RL}$, $\sigma^2_{Ri,L}$ is the Lth element on the diagonal line of eigenelement $\Sigma^2_{Ri}$, and the first channel state matrix $\overline{U}_{i,k}$ is a complex matrix composed of $N_R$ rows and $N_{i,L}$ columns.

In this embodiment, the $N_{i,L}$ is restricted by one of the following criteria:

$$(1) \quad \sigma^2_{Ri,N_{i,L}+1} < \varepsilon \text{ , and } \sigma^2_{Ri,N_{i,L}} \geq \varepsilon \text{ ;}$$

$$(2) \quad \sigma^2_{Ri,N_{i,L}+1} / \sigma^2_{Ri,N_{i,L}} < \varepsilon \text{ ;}$$

$$(3) \quad \sigma^2_{Ri,N_{i,L}+1} < \varepsilon \sigma^2_{Ri,1} \text{ , and } \sigma^2_{Ri,N_{i,L}} \geq \varepsilon \sigma^2_{Ri,1} \text{ ;}$$

and

$$(4) \quad g\left( H_{i,k}, f^{-1}\left( \overline{U}_{i,k}, R_i \right) \right) < \varepsilon$$

where $f^{-1}(\overline{U}_{i,k}, R_i)$ is a channel matrix recovered by using the second channel matrix $R_i$ and the first channel state matrix $\overline{U}_{i,k}$, and $g(H_{i,k}, f^{-1}(\overline{U}_{i,k}, R_i))$ is the difference between matrix $H_{i,k}$ and $f^{-1}(\overline{U}_{i,k}, R_i)$.

In the four criteria above, $\varepsilon$ is a set threshold, and $\sigma^2_{Ri,L}$ is the Lth matrix element on the diagonal line of eigenelement $\Sigma^2_{Ri}$. Alternatively, the right side of the equation

$$\overline{U}_{i,k} = H_{i,k} \cdot \begin{bmatrix} v_{Ri,1} & \cdots & v_{Ri,N_{i,L}} \end{bmatrix} \cdot \begin{bmatrix} \sigma^2_{Ri,1} & & \\ & \ddots & \\ & & \sigma^2_{Ri,N_{i,L}} \end{bmatrix}^{-\frac{1}{2}}$$

is multiplied by an invertible matrix A composed of $N_{i,L}$ rows and $N_{i,L}$ columns, or $[v_{Ri,L}...v_{Ri,}N_{i,L}]$ is multiplied by an invertible matrix B composed of $N_{i,L}$ rows and $N_{i,L}$ columns, and the product is the first channel state matrix $\overline{U}_{i,k}$. In this case, both the UE and the AP need to know the invertible matrix A or invertible matrix B. The selected $N_{i,L}$ may be obtained by the UE adaptively and fed back to the AP, and the $N_{i,L}$

may also be returned by the AP to the UE adaptively, or a fixed value is adopted between the UE and the AP according to set rules.

In step 505 above, a conjugate transposed matrix $\bar{U}_{i,k}^H$ of the first channel state matrix $\bar{U}_{i,k}$ is obtained

$$\tilde{U}_{ii,k} = \bar{U}_{i,k}^H \bar{U}_{i,k},$$

according to the first channel state matrix $U_{i,k}$, and therefore, the first channel matrix to be fed back is where the first channel matrix to be fed back $\tilde{U}_{ii,k}$ is a complex conjugate symmetric matrix composed of $N_{i,L}$ rows and $N_{i,L}$ columns. When feeding back the first channel matrix to be fed back $\tilde{U}_{ii,k}$ to the AP, the UE needs to feed back $N_{i,L}N_{i,L}$ real numbers. Besides, when the UE feeds back the first channel matrix to be fed back $\tilde{U}_{ii,k}$ to the AP, the frequency domain granularity or time domain granularity may also be set to N, and the UE may feed back no first channel matrix to be fed back $\tilde{U}_{ii,k}$ to the AP, depending on the precision requirement. Therefore, when the UE does not need to feed back the first channel matrix to be fed back ($\tilde{U}_{ii,k}$) to the AP, step 505 is omissible.

In step 506 above, a conjugate transposed matrix $\bar{U}_{i,k}^H$ of the first channel state matrix $\bar{U}_{i,k}$ is obtained according to the first channel state matrix $\bar{U}_{i,k}$ and therefore, the second channel matrix to be fed back is

$$\tilde{U}_{ij,k} = \bar{U}_{i,k}^H \bar{U}_{j,k},$$ where the second channel matrix to be fed back $\tilde{U}_{ij,k}$ is a complex matrix composed of $N_{i,L}$ rows and $N_{j,L}$ columns. When feeding back the second channel matrix to be fed back $\tilde{U}_{ij,k}$ to the AP, the UE needs to feed back $2N_{i,L}N_{j,L}$ real numbers. Besides, when the UE feeds back the second channel matrix to be fed back $\tilde{U}_{ij,k}$ to the AP, the frequency domain granularity or time domain granularity may be set to L.

Further, because the second channel matrix to be fed back is $\tilde{U}_{ij,k} = \tilde{U}_{ij,k}^H$, three combinations independent of each other may be selected, for example, $(i,j) \in \{(1,2),(1,3),(2,3)\}$. For unification between the UE and the AP, it is assumed that $i<j$.

When i = 1 and j = 3, the second channel matrix to be fed back is $\tilde{U}_{ij,k}$, and more specifically, $\tilde{U}_{13,k} \approx \tilde{U}_{12,k}\tilde{U}_{23,k}^H$.

When $g\left(\tilde{U}_{13,k}, \tilde{U}_{12,k}\tilde{U}_{23,k}^H\right) < \varepsilon$, the UE may feed back no $\tilde{U}_{13,k}$ to the AP, and substitute $\tilde{U}_{12,k}\tilde{U}_{23,k}^H$ for $\tilde{U}_{13,k}$ where $g\left(\tilde{U}_{13,k}, \tilde{U}_{12,k}\tilde{U}_{23,k}^H\right)$ represents the difference between $\tilde{U}_{13,k}$ and $\tilde{U}_{12,k}\tilde{U}_{23,k}^H$, and $\varepsilon$ is a set threshold. Likewise, the UE needs to feed back only $\tilde{U}_{13,k}$ and $\tilde{U}_{12,k}$ and use the two channel matrixes to replace $\tilde{U}_{13,k}$; the UE needs to feed back only $\tilde{U}_{13,k}$ and $\tilde{U}_{12,k}$ and use the two channel matrixes to replace $\tilde{U}_{23,k}$. Because the first channel state matrix $\bar{U}_{i,k}$ changes with the cell identifier i of the cell where the UE is located. When the cell identifier i changes (namely, the cell where the UE is located changes), the first channel state matrix $\bar{U}_{i,k}$ changes with the cell where the UE is located, and $N_{i,L}$ also changes with the change of the first channel state matrix $\bar{U}_{i,k}$; the first channel matrix to be fed back $\bar{U}_{ii,k}$ and the second channel matrix to be fed back $\tilde{U}_{ij,k}$ fed back by the UE to the AP also change with $N_{i,L}$ adaptively. Therefore, the UE can reduce the overhead of feedback to the AP adaptively, thereby further reducing the feedback amount; and in the embodiment of the present invention, a great feedback granularity M may be selected according to the channel characteristics to reduce the feedback amount, so as to reduce the feedback overhead of the channel state information on the premise of ensuring feedback precision of the channel state information.

In the embodiment shown in FIG. 5, the covariance matrix of the downlink composite channel matrix is fed back in a CoMP scenario, different feedback content can be obtained according to the precision requirement, and the feedback overhead is reduced adaptively. Specifically, when the feedback granularity M of the second channel matrix $R_i$ is far greater than the feedback granularity N of the first channel matrix to be fed back $\tilde{U}_{ii,k}$ or the feedback granularity L of the second channel matrix to be fed back $\tilde{U}_{ii,k}$, the feedback of the second channel matrix $R_i$ is ignorable. If the first channel matrix to be fed back $\tilde{U}_{ii,k}$ does not need to be fed back to the AP, the UE needs to feed back $2 \times 2N_{i,L}N_{j,L}$ real numbers when feeding back the second channel matrix to be fed back $\tilde{U}_{ij,k}$ to the AP, thereby reducing the feedback

overhead by $(1-2N_{i,L}/3N_R) \times 100\%$ (supposing $N_{i,L}=N_{j,L}$) In this embodiment, if $N_{i,L}=2$ and $N_T=4$, the feedback overhead from the UE to the AP decreases by 33% in contrast to that in the embodiment shown in FIG. 3.

In the embodiment shown in FIG. 5 above, after the UE feeds back the first channel matrix to be fed back $\tilde{U}_{ii,k}$ and the second channel matrix to be fed back $\tilde{U}_{ij,k}$ to the AP, the AP calculates the covariance matrix $\bar{R}_{comp}$ of the downlink composite channel matrix through $\bar{H}_{i,k} = f^{-1}(\bar{U}_{i,k}, R_i)$ according to the received second channel matrix $R_i$, the first channel matrix to be fed back $\tilde{U}_{ii,k}$ and the second channel matrix to be fed back $\tilde{U}_{ii,k}$. If the UE feeds back no first channel matrix to be fed back $\tilde{U}_{ii,k}$ to the AP, the AP substitutes the unit matrix $I_{ii,k}$ for the first channel matrix to be fed back $\tilde{U}_{ii,k}$. If the UE feeds back no $\tilde{U}_{13,k}$ to the AP, the AP substitutes $\tilde{U}_{12,k}\tilde{U}_{23,k}^{H}$ for $\tilde{U}_{13,k}$.

$$\bar{H}_{i,k} = \bar{U}_{i,k} \cdot \begin{bmatrix} \sigma^2_{Ri,1} & & \\ & \ddots & \\ & & \sigma^2_{Ri,N_{i,L}} \end{bmatrix}^{\frac{1}{2}} \cdot \begin{bmatrix} v_{Ri,1} & \cdots & v_{Ri,N_{i,L}} \end{bmatrix}^{H},$$

Specifically, the AP may obtain $\bar{H}_{i,k}$ through where the inverse matrix of $[v_{Ri,1} \cdots v_{Ri,N_{i,L}}]$ is replaced with the matrix $[v_{Ri,1} \cdots v_{Ri,N_{i,L}}]^H$, and the right superscript "H" represents a conjugate transposed matrix of the matrix $[v_{Ri,1} \cdots v_{Ri,N_{i,L}}]$. Further, the covariance matrix of the downlink

$$\bar{R}_{comp} = \begin{bmatrix} \bar{H}_1 & \bar{H}_2 & \bar{H}_3 \end{bmatrix}^{H} \begin{bmatrix} \bar{H}_1 & \bar{H}_2 & \bar{H}_3 \end{bmatrix} = \begin{bmatrix} \bar{H}_1^H \bar{H}_1 & \bar{H}_1^H \bar{H}_2 & \bar{H}_1^H \bar{H}_3 \\ \bar{H}_2^H \bar{H}_1 & \bar{H}_2^H \bar{H}_2 & \bar{H}_2^H \bar{H}_3 \\ \bar{H}_3^H \bar{H}_1 & \bar{H}_3^H \bar{H}_2 & H_3^H \bar{H}_3 \end{bmatrix}$$

composite channel matrix                                                                                                          is obtained, where

$$\bar{H}_i^H \bar{H}_j = \left( \bar{H}_j^H \bar{H}_i \right)^H = \begin{bmatrix} v_{Ri,1} & \cdots & v_{Ri,N_{i,L}} \end{bmatrix} \begin{bmatrix} \sigma^2_{Ri,1} & & \\ & \ddots & \\ & & \sigma^2_{Ri,N_{i,L}} \end{bmatrix}^{\frac{1}{2}} \bar{U}_{i,k}^H \bar{U}_{j,k} \begin{bmatrix} \sigma^2_{Rj,1} & & \\ & \ddots & \\ & & \sigma^2_{Rj,N_{j,L}} \end{bmatrix}^{\frac{1}{2}} \begin{bmatrix} v_{Rj,1} & \cdots & v_{Rj,N_{j,L}} \end{bmatrix}^{H}$$

$$= \begin{bmatrix} v_{Ri,1} & \cdots & v_{Ri,N_{i,L}} \end{bmatrix} \begin{bmatrix} \sigma^2_{Ri,1} & & \\ & \ddots & \\ & & \sigma^2_{Ri,N_{i,L}} \end{bmatrix}^{\frac{1}{2}} \tilde{U}_{ij,k} \begin{bmatrix} \sigma^2_{Rj,1} & & \\ & \ddots & \\ & & \sigma^2_{Rj,N_{j,L}} \end{bmatrix}^{\frac{1}{2}} \begin{bmatrix} v_{Rj,1} & \cdots & v_{Rj,N_{j,L}} \end{bmatrix}^{H} ;$$

further, the AP may obtain the covariance matrix $R_i$ specific to each cell, and

$$\bar{R}_i = \bar{H}_i^H \bar{H}_i = \begin{bmatrix} v_{Ri,1} & \cdots & v_{Ri,N_{i,L}} \end{bmatrix} \begin{bmatrix} \sigma^2_{Ri,1} & & \\ & \ddots & \\ & & \sigma^2_{Ri,N_{i,L}} \end{bmatrix}^{\frac{1}{2}} \tilde{U}_{ii,k} \begin{bmatrix} \sigma^2_{Ri,1} & & \\ & \ddots & \\ & & \sigma^2_{Ri,N_{i,L}} \end{bmatrix}^{\frac{1}{2}} \begin{bmatrix} v_{Ri,1} & \cdots & v_{Ri,N_{i,L}} \end{bmatrix}^{H} .$$

FIG. 6 is a schematic flowchart of a method for obtaining channel state information according to yet another embodiment of the present invention. As shown in FIG 6, the method in this embodiment includes the following steps:

Step 601: Obtain a basic codebook.
Step 602: Normalize the vectors that make up the basic codebook.
Step 603: Recombine the normalized vectors into new vectors, in which the new vectors are combined into a multi-antenna codebook.
Step 604: Obtain a PMI of the multi-antenna codebook, and use the PMI as channel state information to be fed back.

In this embodiment, the channel state information is expressed by a Precoding Matrix Indicator (Precoding Matrix Indicator, PMI for short) of the downlink composite channel.

The method for obtaining channel state information according to this embodiment of the present invention generates a multi-antenna codebook as required according to the basic codebook, where the number of dimensions of the multi-antenna codebook is different from that of the basic codebook; and uses the PMI of the multi-antenna codebook as the feedback amount of the precoding matrix of the downlink composite channel, thereby reducing the feedback overhead of the channel state information on the premise of ensuring feedback precision of the channel state information.

In the embodiment shown in FIG. 6, it is assumed that: the cell set to be fed back is composed of cell 1, cell 2, and cell 3; the number of transmitting antennas of the NodeB is $N_T$; and the number of receiving antennas of the UE is $N_R$, where $N_R \leq N_T$. The precoding matrix of the downlink composite channel may be fed back according to the prior art. That is, the precoding matrix of the downlink composite channel is formed by concatenation of two layers of precoding matrixes. The first layer is a single-cell precoding matrix $P_i$, where i is a cell identifier, and the number of rows of $P_i$ is $N_T$; the second layer is a composite precoding matrix $W$ of the cell set to be fed back, where $W$ is a matrix composed

$$P_{comp} = \begin{bmatrix} w_1 P_1 \\ w_2 P_2 \\ w_3 P_3 \end{bmatrix},$$

of 3 rows and 1 column. The precoding matrix of the downlink composite channel is expressed as where $W_1$ is the first element of the composite precoding matrix $W$, $w_2$ is the second element of the composite precoding matrix $W$, and $w_3$ is the third element of the composite precoding matrix $W$. To feed back a composite precoding matrix $W$, a three-dimensional codebook or a three-antenna based codebook is required.

A Long Time Evolution (Long Time Evolution, LTE for short) system and its improved version define only the 2-antenna codebook, 4-antenna codebook and 8-antenna codebook, without designing antenna codebooks of different dimensions required by the composite precoding matrix $W$ to be fed back. In the embodiment shown in FIG. 6, supposing that a 2-antenna codebook is expressed as $CB^{(2)}$ and that a codebook with $N_C$ antennas is expressed as $CB^{(N_C)}$, $CB^{(N_C)}$ can be obtained on the basis of the existing 2-antenna codebook $CB^{(2)}$, 4-antenna codebook $CB^{(4)}$, and 8-antenna codebook $CB^{(8)}$. $CB^{(2)}$ is composed of $N^{(2)}$ 2-dimensional vectors, $CB^{(4)}$ is composed of $N^{(4)}$ 4-dimensional vectors, $CB^{(8)}$ is composed of $N^{(8)}$ 8-dimensional vectors, and $CB^{(N_C)}$ is composed of $N^{(N_C)}$ $N_C$-dimensional vectors. Supposing that a basic codebook is a 2-antenna codebook $CB^{(2)}$, a 4-antenna codebook $CB^{(4)}$, and an 8-antenna codebook $CB^{(8)}$, when $N_C = 3$, the embodiment shown in FIG 6 can generate antenna codebooks of different dimensions required by the composite precoding matrix $W$ to be fed back according to the 2-antenna codebook $CB^{(2)}$ or 4-antenna codebook $CB^{(4)}$.

Specifically, in the case of generating a 3-antenna codebook $CB^{(3)}$ according to a 2-antenna codebook $CB^{(2)}$, the generation process includes the following steps.

Step 611: If the first matrix element of a vector in the 2-antenna codebook $CB^{(2)}$ is not 1, divide this vector by the first matrix element of the vector so that the vector is normalized and that news vector are obtained; and substitute the obtained new vectors for the original vectors in $CB^{(2)}$.

Step 612: Combine the pth vector $w_p^{(2)}$ and the qth vector $w_q^{(2)}$ in the 2-antenna codebook $CB^{(2)}$ into a new

$$w_{pN^{(2)}+q}^{(4)} = \begin{bmatrix} w_p^{(2)} \\ w_q^{(2)} \end{bmatrix}$$

vector , where $p,q=0,1\cdots,N^{(2)}$. As a result, $N^{(2)} \cdot N^{(2)}$ 4-dimensional vectors are obtained in total.

$$w_{pN^{(2)}+q}^{(4)} = \begin{bmatrix} w_p^{(2)} \\ w_q^{(2)} \end{bmatrix}$$

Step 613: Remove the first element in the vector to obtain $N^{(2)} \cdot N^{(2)}$ 3-dimensional vectors, and normalize the obtained $N^{(2)} \cdot N^{(2)}$ 3-dimensional vectors to form a new 3-antenna codebook $CB^{(3)}$ which includes $N^{(2)} \cdot N^{(2)}$ 3-dimensional vectors in total.

To reduce the bits to be fed back, $N^{(3)}$ vectors with the greatest chordal distance are selected among the $N^{(2)} \cdot N^{(2)}$ vectors to form a 3-antenna codebook $CB^{(3)}$

Specifically, in the case of generating a 3-antenna codebook $CB^{(3)}$ according to a 4-antenna codebook $CB^{(4)}$, the generation process includes the following steps.

Step 621: If the first matrix element of a vector in the 4-antenna codebook $CB^{(4)}$ is not 1, divide this vector by the first matrix element of the vector so that the vector is normalized and that new vectors are obtained; and substitute the obtained new vectors for the original vectors in the 4-antenna codebook $CB^{(4)}$.

Step 622: Remove the first matrix element in the obtained new vectors to obtain $N^{(4)}$ 3-dimensional vectors, and normalize the $N^{(4)}$ 3-dimensional vectors.

Step 623: Use the normalized vectors to form a new 3-antenna codebook $CB^{(3)}$ which includes $N^{(2)} \cdot N^{(2)}$ 3-dimensional vectors in total.

To reduce the bits to be fed back, $N^{(3)}$ vectors with the greatest chordal distance are selected among the $N^{(2)} \cdot N^{(2)}$ vectors to form a 3-antenna codebook $CB^{(3)}$ that includes $N^{(3)}$ vectors.

For details of generating a 5-antenna codebook $CB^{(5)}$, a 6-antenna codebook $CB^{(6)}$, a 7-antenna codebook $CB^{(7)}$, and a 9-antenna codebook $CB^{(9)}$ on the basis of a 2-antenna codebook $CB^{(2)}$ and a 4-antenna codebook $CB^{(4)}$, reference may be made to steps 611 to 613 or steps 621 to 623 above.

It can be known from the embodiment shown in FIG. 6 that: there may be one or more basic codebooks or a combination of multiple basic codebooks for generating a $N_C$-antenna codebook $CB^{(N_C)}$, where $N_C$ is not limited to 2 to 9 and may be a greater number. The mode of generating the basic codebook is not limited to the embodiment of the present invention; and the basic codebooks are not limited to the 2-antenna codebook, 4-antenna codebook, and 8-antenna codebook. The basic codebooks may be codebooks generated on the basis of the 2-antenna codebook, 4-antenna codebook, and 8-antenna codebook so long as they meet the actual needs.

Further, in the embodiment shown in FIG 6, if the generated multi-antenna codebook is a single-layer codebook, namely, the multi-antenna codebook is a matrix composed of $N_C$ rows and 1 column, the multi-antenna codebook can be used to express the channel matrix H of a Multiple Input Single Output (Multiple Input Single Output, MISO for short) antenna system, where H is a matrix composed of 1 row and $N_C$ columns and is sent by $N_C$ antennas.

FIG. 7 is a schematic flowchart of a method for obtaining channel state information according to further another embodiment of the present invention. As shown in FIG 7, the method in this embodiment includes the following steps:

Step 701: Obtain a basic codebook.

Step 702: Normalize the vectors that make up the basic codebook.

Step 703: Recombine the normalized vectors into new vectors. The new vectors are combined into a multi-antenna codebook.

Step 704: Obtain a PMI corresponding to the precoding matrix of the multi-antenna codebook, obtain a tuning parameter corresponding to the PMI, and use the PMI and the tuning parameter as channel state information to be fed back.

Steps 701 to 703 above are the same as steps 601 to 603 in the embodiment shown in FIG 6; the method of obtaining the basic codebook and the method of obtaining the multi-antenna codebook on the basis of the basic codebook are the same, and details are not described herein again.

In step 704 above, the UE may feed back the channel matrix in a Multiple-Input Multiple-Output (Multiple-Input Multiple-Output, MIMO for short) antenna system to the AP through the obtained multi-antenna codebook. More specifically, for each receiving antenna, the UE feeds back the following to the AP: the PMI corresponding to the precoding vector $w_j^{(N_T)}$ of the multi-antenna codebook in the MISO antenna system, and the tuning parameter $\alpha_j$ corresponding to the precoding vector $w_j^{(N_T)}$, where j is the sequence number of the receiving antenna, $w_j^{(N_T)}$ is a precoding vector of the multi-antenna codebook, and $\alpha_j$ is a complex number. The UE may feed back no tuning parameter $\alpha_j$ to the AP when appropriate, thereby reducing the feedback overhead from the UE to the AP. After receiving the PMI and

$$H = \begin{bmatrix} \alpha_1 w_1^{(N_T)} \\ \vdots \\ \alpha_{N_R} w_{N_R}^{(N_T)} \end{bmatrix}$$

the tuning parameter $\alpha_j$ fed back by the UE, the AP reconstructs a channel matrix according to the precoding vector and the tuning parameter $\alpha_j$. If no $\alpha_j$ is fed back, $\alpha_j$=1 is supposed in the channel matrix

$$H = \begin{bmatrix} \alpha_1 w_1^{(N_T)} \\ \vdots \\ \alpha_{N_R} w_{N_R}^{(N_T)} \end{bmatrix}.$$

The method for obtaining channel state information according to this embodiment of the present invention generates a multi-antenna codebook according to the basic codebook, where the number of dimensions of the multi-antenna codebook is different from that of the basic codebook; and uses the PMI and the tuning parameter as channel state information to be fed back, thereby reducing the feedback overhead of the channel state information on the premise of ensuring feedback precision of the channel state information.

FIG. 8 is a schematic structure diagram of an apparatus for obtaining channel state information according to an embodiment of the present invention. The apparatus in this embodiment of the present invention implements the method procedure of the embodiments shown in FIG. 2 to FIG 5. As shown in FIG. 8, the apparatus in this embodiment includes:

a first obtaining module 81, configured to obtain a first channel matrix on a time-frequency point;
a calculating module 82, configured to calculate a second channel matrix on a time-frequency domain under a set feedback granularity according to the first channel matrix obtained by the first obtaining module 81; and
a second obtaining module 83, configured to obtain a first channel state matrix according to the first channel matrix obtained by the first obtaining module 81 and the second channel matrix calculated by the calculating module 82.

Through the apparatus for obtaining channel state information in this embodiment of the present invention, the calculating module 82 sets a great feedback granularity to reduce the feedback amount of the channel state information in view of the channel characteristics, thereby reducing the feedback overhead of the channel state information on the premise of ensuring feedback precision of the channel state information.

FIG. 9 is a schematic structure diagram of an apparatus for obtaining channel state information according to another embodiment of the present invention. The apparatus in this embodiment of the present invention implements the method procedure of the embodiments shown in FIG 2 to FIG 5. As shown in FIG. 9, the apparatus in this embodiment includes:

a first obtaining module 91, configured to obtain a first channel matrix on a time-frequency point;
a calculating module 92, configured to calculate a second channel matrix on a time-frequency domain under a set feedback granularity according to the first channel matrix obtained by the first obtaining module 91;
a second obtaining module 93, configured to obtain a first channel state matrix according to the first channel matrix obtained by the first obtaining module 91 and the second channel matrix calculated by the calculating module 92;
a first feedback content obtaining module 94, configured to obtain a first channel matrix to be fed back according to the first channel state matrix obtained by the second obtaining module 93; and
a second feedback content obtaining module 95, configured to obtain a second channel matrix to be fed back according to the first channel state matrix obtained by the second obtaining module 93.

The calculating module 92 further includes:

a first obtaining unit 921, configured to obtain a first conjugate transposed matrix of the first channel matrix; and
a second obtaining unit 922, configured to obtain a second channel matrix under a set feedback granularity according to the first channel matrix and the first conjugate transposed matrix obtained by the first obtaining unit 921.

Through the apparatus for obtaining channel state information in this embodiment of the present invention, the calculating module 92 sets a great feedback granularity to reduce the feedback amount of the channel state information in view of the channel characteristics, thereby reducing the feedback overhead of the channel state information on the premise of ensuring feedback precision of the channel state information.

FIG. 10 is a schematic structure diagram of an apparatus for obtaining channel state information according to still another embodiment of the present invention. The apparatus in this embodiment of the present invention implements the method procedure of the embodiment shown in FIG. 6 or FIG 7. As shown in FIG 10, the apparatus in this embodiment includes:

a first obtaining module 101, configured to obtain a basic codebook;

a normalizing module 102, configured to normalize vectors that make up the basic codebook obtained by the first obtaining module 101;

a combining module 103, configured to recombine the vectors normalized by the normalizing module 102 into new vectors, where the new vectors are combined into a multi-antenna codebook; and

a second obtaining module 104, configured to obtain a PMI of the multi-antenna codebook formed by the combining module 103, and use the PMI as channel state information to be fed back.

Through the apparatus for obtaining channel state information in this embodiment of the present invention, the combining module 103 generates a multi-antenna codebook according to the existing basic codebook; and uses the PMI of the multi-antenna codebook as a feedback amount of the precoding matrix of the downlink composite channel, thereby reducing the feedback overhead of the channel state information on the premise of ensuring feedback precision of the channel state information.

FIG 11 is a schematic structure diagram of an apparatus for obtaining channel state information according to yet another embodiment of the present invention. The apparatus in this embodiment of the present invention implements the method procedure of the embodiment shown in FIG. 6 or FIG. 7. As shown in FIG 11, the apparatus in this embodiment includes:

a first obtaining module 11, configured to obtain a basic codebook;

a normalizing module 12, configured to normalize vectors that make up the basic codebook obtained by the first obtaining module 11;

a combining module 13, configured to recombine the vectors normalized by the normalizing module 12 into new vectors, where the new vectors are combined into a multi-antenna codebook; and

a second obtaining module 14, configured to obtain a PMI of the multi-antenna codebook formed by the combining module 13, and use the PMI as channel state information to be fed back.

Further, the normalizing module 12 may include a normalizing unit 121, which is configured to divide a vector in the basic codebook by the first matrix element of the vector to implement normalization if the first matrix element of the vector is not 1.

Further, the second obtaining module 14 may include:

a first obtaining unit 141, configured to obtain a PMI corresponding to the precoding matrix of the multi-antenna codebook;

a second obtaining unit 142, configured to obtain a tuning parameter corresponding to the PMI; and

a feedback unit 143, configured to use the PMI and the tuning parameter as channel state information to be fed back.

Through the apparatus for obtaining channel state information in this embodiment of the present invention, the normalizing module 12 generates a multi-antenna codebook as required according to the basic codebook, where the number of dimensions of the multi-antenna codebook is different from that of the basic codebook; the PMI obtained by the first obtaining unit 141 and the tuning parameter obtained by the second obtaining unit 142 are used as channel state information to be fed back, thereby reducing the feedback overhead of the channel state information on the premise of ensuring feedback precision of the channel state information.

An apparatus for obtaining channel state information is provided in another embodiment of the present invention. The apparatus in this embodiment of the present invention implements the method procedure of the embodiments shown in FIG. 2 to FIG 5. The apparatus may include:

a first obtaining module 11, configured to obtain a first channel matrix on a time-frequency point;

a calculating module 12, configured to calculate a second channel matrix on a time-frequency domain under a set feedback granularity according to the first channel matrix obtained by the first obtaining module; and

a second obtaining module 13, configured to obtain a first channel state matrix according to the first channel matrix obtained by the first obtaining module and the second channel matrix calculated by the calculating module.

The calculating module may include:

a first obtaining unit 1221, configured to obtain a first conjugate transposed matrix of the first channel matrix obtained by the first obtaining module; and

a second obtaining unit 1222, configured to obtain a second channel matrix under a set feedback granularity according to the first channel matrix obtained by the first obtaining module and the first conjugate transposed matrix obtained by the first obtaining unit.

Further, the apparatus may include: a first feedback content obtaining module 124, a second feedback content obtaining module 125, and a unit 126 for sending the first feedback channel matrix and the second feedback channel matrix.

The first feedback content obtaining module 124 is configured to obtain the first channel matrix to be fed back according to the first channel state matrix obtained by the second obtaining module; the second feedback content obtaining module 125 is configured to obtain the second channel matrix to be fed back according to the first channel state matrix obtained by the second obtaining module; and the unit 126 is configured to send the first feedback channel state matrix and the second feedback channel matrix.

Or, the apparatus may further include a unit 127 configured to send the first channel state matrix.

The second obtaining module is specifically configured to obtain the first channel state matrix according to the eigenvalue of the second channel matrix, the eigenvector corresponding to the eigenvalue, and the first channel matrix. Further, the second obtaining module is specifically configured to obtain the first channel state matrix by multiplying a product of the first channel matrix and the eigenvector corresponding to the main eigenvalue of the second channel matrix, and the main eigenvalue to the power of -½.

Through the method and the apparatus for obtaining channel state information above, a great feedback granularity may be set according to the channel characteristics to reduce the feedback amount of the channel state information, or a multi-antenna codebook is generated according to the basic codebook as required, where the number of dimensions of the multi-antenna codebook is different from that of the basic codebook; the PMI of the multi-antenna codebook is used as a feedback amount of the precoding matrix of the downlink composite channel, thereby reducing the feedback overhead of the channel state information on the premise of ensuring feedback precision of the channel state information.

An apparatus for obtaining channel state information is provided in another embodiment of the present invention. The apparatus in this embodiment of the present invention implements the method procedure of the embodiment shown in FIG. 6 or FIG. 7. The apparatus may include:

a first obtaining module 21, configured to obtain a basic codebook;
a normalizing module 22, configured to normalize a first element of vectors that make up the basic codebook obtained by the first obtaining module;
a combining module 23, configured to: recombine the vectors normalized by the normalizing module into new vectors, combine the new vectors into a normalized multi-antenna codebook, and select multiple vectors with a greatest chordal distance among the vectors of the normalized multi-antenna codebook to form a multi-antenna codebook; and
a second obtaining module 24, configured to obtain a PMI of the multi-antenna codebook formed by the combining module through combination, and use the PMI as channel state information to be fed back.

The normalizing module includes:
a normalizing unit 2201, configured to divide a vector in the basic codebook by the first matrix element of the vector to implement normalization if the first matrix element of the vector is not 1.

The combining module includes:

a unit 2301, configured to combine the normalized vectors into new vectors;
a unit 2302, configured to delete the first element in the new vectors to obtain vectors of the multi-antenna codebook;
a unit 2303, configured to normalize moduli of the vectors of the multi-antenna codebook to obtain vector of the normalized multi-antenna codebook; and
a unit 2304, configured to select multiple vectors with a greatest chordal distance among the vectors of the normalized multi-antenna codebook to form a multi-antenna codebook.

The second obtaining module includes:

a first obtaining unit 2401, configured to obtain a PMI corresponding to the precoding matrix of the multi-antenna codebook;
a second obtaining unit 2402, configured to obtain a tuning parameter corresponding to the PMI obtained by the first obtaining unit; and
a feedback unit 2403, configured to use the PMI obtained by the first obtaining unit and the tuning parameter obtained by the second obtaining unit as channel state information to be fed back.

In the embodiments of the present invention, the AP is an access point that enables the UE to access the wired network. In a Global System for Mobile Communications (Global System for Mobile Communications, GSM for short) network, the AP may serve as a Base Transceiver Station (Base Transceiver Station, BTS for short); in a Wideband-Code Division Multiple Access (Wideband-Code Division Multiple Access, WCDMA for short) network, the AP may serve as a NodeB; in an LTE network, the AP may serve as an evolved NodeB (eNodeB). The technical solutions according to the embodiments of the present invention are applicable only if selective scheduling in the wireless communication system is based on the time-frequency domain of the channel state information.

Persons of ordinary skill in the art should understand that all or part of the steps of the method according to the embodiments of the present invention may be implemented by a program instructing relevant hardware. The program may be stored in a computer readable storage medium. When the program runs, the steps of the method according to the embodiments of the present invention are performed. The storage medium may be any medium that is capable of storing program codes, such as a Read Only Memory (ROM), a Random Access Memory (RAM), a magnetic disk, or an optical disk.

Finally, it should be noted that the above embodiments are merely provided for describing the technical solutions of the present invention, but not intended to limit the present invention. It is apparent that persons of ordinary skill in the art can make various modifications and variations to the present invention without departing from the scope of the present invention. The present invention is intended to cover the modifications and variations provided that they fall within the scope of protection defined by the appended claims.

**Claims**

1. A method for obtaining channel state information in a coordinated multi-point transmission/reception system including a plurality of cells in a reporting cell set and a user equipment, comprising:

   obtaining (201) a first channel matrix on a time or frequency point;
   calculating (202) a second channel matrix on a time or frequency domain under a set feedback granularity according to the first channel matrix;
   obtaining (203) a first channel state matrix according to an eigenvalue of the second channel matrix, an eigenvector corresponding to the eigenvalue, and the first channel matrix,
   obtaining a first channel matrix to be fed back according to the first channel state matrix and a conjugate transposed matrix of the first channel state matrix of a current cell;
   obtaining a plurality of second channel matrices to be fed back, wherein each of the second channel matrices to be fed back is obtained according to a conjugate transposed matrix of the first channel state matrix and a first channel state matrix of another cell in the reporting cell set, wherein the another cell is a cell except the current cell in the reporting cell set; and
   sending the first channel matrix to be fed back and not all channel matrices of the plurality of second channel matrices to be fed back, wherein sending not all channel matrices of the plurality of second channel matrices to be fed back comprises: when a difference between one second channel matrix of the plurality of second channel matrices to be fed back and a product of two other second channel matrices of the plurality of second channel matrices to be fed back is less than a set threshold, not sending the one second channel matrix.

2. The method according to claim 1, wherein:
   the calculating the second channel matrix on the time or frequency domain under the set feedback granularity according to the first channel matrix comprises:

   obtaining a first conjugate transposed matrix of the first channel matrix; and
   obtaining the second channel matrix under the set feedback granularity according to the first channel matrix and the first conjugate transposed matrix.

3. The method according to claim 1, wherein the obtaining the first channel state matrix comprises:
   obtaining the first channel state matrix by multiplying a product of the first channel matrix and an eigenvector corresponding to a main eigenvalue of the second channel matrix, and the main eigenvalue to the power of $-\frac{1}{2}$.

4. An apparatus for obtaining channel state information in a coordinated multi-point transmission/reception system including a plurality of cells in a reporting cell set and a user equipment, comprising:

   a first obtaining module (81), configured to obtain a first channel matrix on a time or frequency point;
   a calculating module (82), configured to calculate a second channel matrix on a time or frequency domain under a set feedback granularity according to the first channel matrix obtained by the first obtaining module; and
   a second obtaining module (83), configured to obtain a first channel state matrix according to an eigenvalue of the second channel matrix calculated by the calculating module, an eigenvector corresponding to the eigenvalue, and the first channel matrix,
a first feedback content obtaining module (94), configured to obtain a first channel matrix to be fed back according to the first channel state matrix of a current cell obtained by the second obtaining module;
a second feedback content obtaining module (95), configured to obtain a plurality of second channel matrices to be fed back, wherein each of the second channel matrices to be fed back is obtained according to a conjugate transposed matrix of the first channel state matrix and a first channel state matrix of another cell in the reporting cell set, wherein the another cell is a cell except the current cell in the reporting cell set; and
a unit, configured to send the first channel matrix to be fed back and not all channel matrices of the plurality of second channel matrices to be fed back, wherein when a difference between one second channel matrix of the plurality of second channel matrices to be fed back and a product of two other second channel matrices of the plurality of second channel matrices to be fed back is less than a set threshold, not to send the one second channel matrix.

5. The apparatus according to claim 4, wherein the calculating module comprises:

a first obtaining unit(921), configured to obtain a first conjugate transposed matrix of the first channel matrix obtained by the first obtaining module; and
a second obtaining unit(922), configured to obtain the second channel matrix under the set feedback granularity according to the first channel matrix obtained by the first obtaining module and the first conjugate transposed matrix obtained by the first obtaining unit.

6. The apparatus according to claim 4, wherein: the obtaining the first channel state matrix comprises:
obtaining the first channel state matrix by multiplying a product of the first channel matrix and an eigenvector corresponding to a main eigenvalue of the second channel matrix, and the main eigenvalue to the power of $-\frac{1}{2}$.

7. A computer program product comprising computer program code, which, when executed by a computer unit, will cause the computer unit to perform the steps of a method according to any one of claims 1 to 3.

**Patentansprüche**

1. Verfahren zum Erhalten von Kanalzustandsinformationen in einem koordinierten Mehrpunkt-Übertragungs-/Empfangssystem, das eine Vielzahl von Zellen in einem Berichtzellensatz und ein Benutzergerät einschließt, wobei das Verfahren Folgendes umfasst:

Erhalten (201) einer ersten Kanalmatrix auf einem Zeit- oder Frequenzpunkt;
Berechnen (202) einer zweiten Kanalmatrix auf einem Zeit- oder Frequenzbereich unter einer festgelegten Feedback-Granularität gemäß der ersten Kanalmatrix;
Erhalten (203) einer ersten Kanalzustandsmatrix gemäß einem Eigenwert der zweiten Kanalmatrix, einem dem Eigenwert entsprechenden Eigenvektor und der ersten Kanalmatrix,
Erhalten einer ersten Kanalmatrix, die gemäß der ersten Kanalzustandsmatrix und einer transponiert-konjugierten Matrix der ersten Kanalzustandsmatrix einer Stromzelle zurückzuführen ist;
Erhalten einer Vielzahl von zurückzuführenden zweiten Kanalmatrizen, wobei jede der zurückzuführenden zweiten Kanalmatrizen gemäß einer transponiert-konjugierten Matrix der ersten Kanalzustandsmatrix und einer ersten Kanalzustandsmatrix einer anderen Zelle in dem Berichtzellensatz erhalten wird, wobei die andere Zelle eine Zelle außer der Stromzelle in dem Berichtzellensatz ist; und
Senden der zurückzuführenden ersten Kanalmatrix und nicht aller Kanalmatrizen der Vielzahl der zurückzuführenden zweiten Kanalmatrizen, wobei das Senden nicht aller Kanalmatrizen der Vielzahl der zurückzuführenden zweiten Kanalmatrizen Folgendes umfasst:
wenn eine Differenz zwischen einer zweiten Kanalmatrix der Vielzahl der zurückzuführenden zweiten Kanalmatrizen und einem Produkt von zwei anderen zweiten Kanalmatrizen der Vielzahl der zurückzuführenden zweiten Kanalmatrizen kleiner als ein festgelegter Schwellenwert ist, Nichtsenden der einen zweiten Kanalmatrix.

2. Verfahren gemäß Anspruch 1, wobei
Berechnen der zweiten Kanalmatrix auf dem Zeit- oder Frequenzbereich unter der festgelegten Feedback-Granularität gemäß der ersten Kanalmatrix Folgendes umfasst:

Erhalten einer ersten transponiert-konjugierten Matrix der ersten Kanalmatrix; und
Erhalten der zweiten Kanalmatrix unter der festgelegten Feedback-Granularität gemäß der ersten Kanalmatrix und der ersten transponiert-konjugierten Matrix.

3. Verfahren gemäß Anspruch 1, wobei das Erhalten der ersten Kanalzustandsmatrix Folgendes umfasst:
Erhalten der ersten Kanalzustandsmatrix durch Multiplizieren eines Produkts der ersten Kanalzustandsmatrix und eines Eigenvektors, der einem Haupt-Eigenwert der zweiten Kanalmatrix entspricht, und dem Haupt-Eigenwert hoch -½.

4. Vorrichtung zum Erhalten von Kanalzustandsinformationen in einem koordinierten Mehrpunkt-Übertragungs-/Empfangssystem, das eine Vielzahl von Zellen in einem Berichtzellensatz und ein Benutzergerät einschließt, wobei die Vorrichtung Folgendes umfasst:

ein erstes Erhaltungsmodul (81), das dazu ausgelegt ist, eine erste Kanalmatrix auf einem Zeit- oder Frequenzpunkt zu erhalten;
ein Berechnungsmodul (82), das dazu ausgelegt ist, eine zweite Kanalmatrix auf einem Zeit- oder Frequenzbereich unter einer festgelegten Feedback-Granularität gemäß der ersten Kanalmatrix zu berechnen, die durch das erste Erhaltungsmodul erhalten wurde; und
ein zweites Erhaltungsmodul (83), das dazu ausgelegt ist, eine erste Kanalzustandsmatrix gemäß einem Eigenwert der zweiten Kanalmatrix, der durch das Berechnungsmodul berechnet wurde, einem dem Eigenwert entsprechenden Eigenvektor und der ersten Kanalmatrix zu erhalten,
ein erstes Feedbackinhalt-Erhaltungsmodul (94), das dazu ausgelegt ist, eine zurückzuführende erste Kanalmatrix gemäß der ersten Kanalzustandsmatrix einer Stromzelle zu erhalten, die durch das zweite Erhaltungsmodul erhalten wurde;
ein zweites Feedbackinhalt-Erhaltungsmodul (95), das dazu ausgelegt ist, eine Vielzahl von zurückzuführenden zweiten Kanalmatrizen zu erhalten, wobei jede der zurückzuführenden zweiten Kanalmatrizen gemäß einer transponiert-konjugierten Matrix der ersten Kanalzustandsmatrix und einer ersten Kanalzustandsmatrix einer anderen Zelle in dem Berichtzellensatz erhalten wird, wobei die andere Zelle eine Zelle außer der Stromzelle in dem Berichtzellensatz ist; und
eine Einheit, die dazu ausgelegt ist, die zurückzuführende erste Kanalmatrix und nicht alle Kanalmatrizen der Vielzahl der zurückzuführenden zweiten Kanalmatrizen zu senden, wobei, wenn eine Differenz zwischen einer zweiten Kanalmatrix der Vielzahl der zurückzuführenden zweiten Kanalmatrizen und einem Produkt von zwei anderen zweiten Kanalmatrizen der Vielzahl der zurückzuführenden zweiten Kanalmatrizen kleiner als ein festgelegter Schwellenwert ist, die eine zweite Kanalmatrix nicht zu senden.

5. Vorrichtung gemäß Anspruch 4, wobei das Berechnungsmodul Folgendes umfasst:

eine erste Erhaltungseinheit (921), die dazu ausgelegt ist, eine erste transponiert-konjugierten Matrix der ersten Kanalmatrix zu erhalten, die durch das erste Erhaltungsmodul erhalten wurde; und
eine zweite Erhaltungseinheit (922), die dazu ausgelegt ist, die zweite Kanalmatrix unter der festgelegten Feedback-Granularität gemäß der ersten Kanalmatrix zu erhalten, die durch das erste Erhaltungsmodul erhalten wurde, und der ersten transponiert-konjugierten Matrix, die durch die erste Erhaltungseinheit erhalten wurde.

6. Vorrichtung gemäß Anspruch 4, wobei das Erhalten der ersten Kanalzustandsmatrix Folgendes umfasst:
Erhalten der ersten Kanalzustandsmatrix durch Multiplizieren eines Produkts der ersten Kanalzustandsmatrix und eines Eigenvektors, der einem Haupt-Eigenwert der zweiten Kanalmatrix entspricht, und dem Haupt-Eigenwert hoch -½.

7. Computerprogrammprodukt, das Computerprogrammcode umfasst, der, wenn er von einer Rechnereinheit ausgeführt wird, die Rechnereinheit veranlasst, die Schritte eines Verfahrens gemäß einem der Ansprüche 1 bis 3 auszuführen.

**Revendications**

1. Procédé pour obtenir des informations d'état de canal dans un système de transmission/réception multipoint coordonné incluant une pluralité de cellules dans un ensemble de cellules de réalisation de rapport et un équipement utilisateur, comprenant :

l'obtention (201) d'une première matrice de canal sur un point temporel ou fréquentiel ;

le calcul (202) d'une seconde matrice de canal sur un domaine temporel ou fréquentiel sous une granularité de rétroaction définie selon la première matrice de canal ;

l'obtention (203) d'une première matrice d'état de canal selon une valeur propre de la seconde matrice de canal, un vecteur propre correspondant à la valeur propre, et la première matrice de canal,

l'obtention d'une première matrice de canal destinée à être fournie en retour selon la première matrice d'état de canal et d'une matrice transposée conjuguée de la première matrice d'état de canal d'une cellule actuelle ;

l'obtention d'une pluralité de secondes matrices de canal destinées à être fournies en retour, dans lequel chacune des secondes matrices de canal destinées à être fournies en retour est obtenue selon une matrice transposée conjuguée de la première matrice d'état de canal et une première matrice d'état de canal d'une autre cellule dans l'ensemble de cellules de réalisation de rapport, dans lequel

l'une autre cellule est une cellule à l'exception de la cellule actuelle dans l'ensemble de cellules de réalisation de rapport ; et

l'envoi de la première matrice de canal destinée à être fournie en retour et de la non-totalité des matrices de canal de la pluralité de secondes matrices de canal destinées à être fournies en retour, dans lequel l'envoi de la non-totalité des matrices de canal de la pluralité de secondes matrices de canal destinées à être fournies en retour comprend : lorsqu'une différence entre une seconde matrice de canal de la pluralité de secondes matrices de canal destinées à être fournies en retour et un produit de deux autres secondes matrices de canal de la pluralité de secondes matrices de canal destinées à être fournies en retour est inférieure à un seuil défini, le non-envoi de l'une seconde matrice de canal.

2. Procédé selon la revendication 1, dans lequel :

le calcul de la seconde matrice de canal sur le domaine temporel ou fréquentiel sous la granularité de rétroaction définie selon la première matrice de canal comprend :

l'obtention d'une première matrice transposée conjuguée de la première matrice de canal ; et

l'obtention de la seconde matrice de canal sous la granularité de rétroaction définie selon la première matrice de canal et la première matrice transposée conjuguée.

3. Procédé selon la revendication 1, dans lequel l'obtention de la première matrice d'état de canal comprend :

l'obtention de la première matrice d'état de canal en multipliant un produit de la première matrice de canal et d'un vecteur propre correspondant à une valeur propre principale de la seconde matrice de canal, et la valeur propre principale à la puissance de -½.

4. Appareil pour obtenir des informations d'état de canal dans un système de transmission/réception multipoint coordonné incluant une pluralité de cellules dans un ensemble de cellules de réalisation de rapport et un équipement utilisateur, comprenant :

un premier module d'obtention (81), configuré pour obtenir une première matrice de canal sur un point temporel ou fréquentiel ;

un module de calcul (82), configuré pour calculer une seconde matrice de canal sur un domaine temporel ou fréquentiel sous une granularité de rétroaction définie selon la première matrice de canal obtenue par le premier module d'obtention ; et

un second module d'obtention (83), configuré pour obtenir une première matrice d'état de canal selon une valeur propre de la seconde matrice de canal calculée par le module de calcul, un vecteur propre correspondant à la valeur propre, et la première matrice de canal,

un premier module d'obtention de contenu de rétroaction (94), configuré pour obtenir une première matrice de canal destinée à être fournie en retour selon la première matrice d'état de canal d'une cellule actuelle obtenue par le second module d'obtention ;

un second module d'obtention de contenu de rétroaction (95), configuré pour obtenir une pluralité de secondes matrices de canal destinées à être fournies en retour, dans lequel chacune des secondes matrices de canal destinées à être fournies en retour est obtenue selon une matrice transposée conjuguée de la première matrice d'état de canal et une première matrice d'état de canal d'une autre cellule dans l'ensemble de cellules de réalisation de rapport, dans lequel l'une autre cellule est une cellule à l'exception de la cellule actuelle dans l'ensemble de cellules de réalisation de rapport ; et

une unité, configurée pour envoyer la première matrice de canal destinée à être fournie en retour et la non-totalité des matrices de canal de la pluralité de secondes matrices de canal destinées à être fournies en retour, dans lequel lorsqu'une différence entre une seconde matrice de canal de la pluralité de secondes matrices de canal destinées à être fournies en retour et un produit de deux autres secondes matrices de canal de la pluralité de secondes matrices de canal destinées à être fournies en retour est inférieure à un seuil défini, pour ne pas envoyer l'une seconde matrice de canal.

5. Appareil selon la revendication 4, dans lequel le module de calcul comprend :

une première unité d'obtention (921), configurée pour obtenir une première matrice transposée conjuguée de la première matrice de canal obtenue par le premier module d'obtention ; et
une seconde unité d'obtention (922), configurée pour obtenir la seconde matrice de canal sous la granularité de rétroaction définie selon la première matrice de canal obtenue par le premier module d'obtention et la première matrice transposée conjuguée obtenue par la première unité d'obtention.

6. Appareil selon la revendication 4, dans lequel : l'obtention de la première matrice d'état de canal comprend : l'obtention de la première matrice d'état de canal en multipliant un produit de la première matrice de canal et d'un vecteur propre correspondant à une valeur propre principale de la seconde matrice de canal, et la valeur propre principale à la puissance de -½.

7. Produit programme d'ordinateur comprenant un code de programme d'ordinateur, qui, lorsqu'il est exécuté par une unité d'ordinateur, fera en sorte que l'unité d'ordinateur réalise les étapes d'un procédé selon l'une quelconque des revendications 1 à 3.

Reporting set

Cell 3

Cell 2

Cell 1

$H_2$

$H_3$

$H_1$

UE

Cell 4

Cell 5

FIG. 1

| Obtain a first channel matrix on a time-frequency point | 201 |

| Calculate a second channel matrix on a time-frequency domain under a set feedback granularity according to the first channel matrix | 202 |

| Obtain a first channel state matrix to be fed back according to the first channel matrix and the second channel matrix | 203 |

FIG. 2

| | 301 |
|---|---|
| Obtain a first channel matrix on a time-frequency point | |

| | 302 |
|---|---|
| Obtain a first conjugate transposed matrix of the first channel matrix | |

| | 303 |
|---|---|
| Obtain a second channel matrix under a set feedback granularity according to the first channel matrix and the first conjugate transposed matrix | |

| | 304 |
|---|---|
| Obtain a first channel state matrix according to the first channel matrix and the second channel matrix | |

FIG. 3

FIG. 4

| Obtain a first channel matrix on a time-frequency point | 501 |

↓

| Obtain a first conjugate transposed matrix of the first channel matrix | 502 |

↓

| Obtain a second channel matrix under a set feedback granularity according to the first channel matrix and the first conjugate transposed matrix | 503 |

↓

| Obtain a first channel state matrix according to the eigenvalue of the second channel matrix, the eigenvector corresponding to the eigenvalue, and the first channel matrix | 504 |

↓

| Obtain a first matrix to be fed back according to the first channel state matrix | 505 |

↓

| Obtain a second matrix to be fed back according to the first channel state matrix | 506 |

FIG. 5

```
┌─────────────────────────────────────────────────────────────┐  601
│              Obtain a basic codebook                        ├──
└─────────────────────────────────────────────────────────────┘
                              │
                              ▼
┌─────────────────────────────────────────────────────────────┐  602
│       Normalize the vectors that make up the basic codebook ├──
└─────────────────────────────────────────────────────────────┘
                              │
                              ▼
┌─────────────────────────────────────────────────────────────┐  603
│  Recombine the normalized vectors into new vectors, in which the │
│  new vectors are combined into a multi-antenna codebook     ├──
└─────────────────────────────────────────────────────────────┘
                              │
                              ▼
┌─────────────────────────────────────────────────────────────┐  604
│  Obtain a PMI of the multi-antenna codebook, and use the PMI as │
│  channel state information to be fed back                   ├──
└─────────────────────────────────────────────────────────────┘
```

FIG. 6

```
┌─────────────────────────────────────────────────────────────┐  701
│              Obtain a basic codebook                        ├──
└─────────────────────────────────────────────────────────────┘
                              │
                              ▼
┌─────────────────────────────────────────────────────────────┐  702
│       Normalize the vectors that make up the basic codebook ├──
└─────────────────────────────────────────────────────────────┘
                              │
                              ▼
┌─────────────────────────────────────────────────────────────┐  703
│  Recombine the normalized vectors into new vectors, in which the │
│  new vectors are combined into a multi-antenna codebook     ├──
└─────────────────────────────────────────────────────────────┘
                              │
                              ▼
┌─────────────────────────────────────────────────────────────┐  704
│  Obtain a PMI corresponding to the precoding matrix of the multi- │
│  antenna codebook, obtain a tuning parameter corresponding to the │
│  PMI, and use the PMI and tuning parameter as channel state ├──
│  information to be fed back                                 │
└─────────────────────────────────────────────────────────────┘
```

FIG. 7

First obtaining module `-81`

Calculating module `-82`

Second obtaining module `-83`

FIG. 8

First obtaining module `-91`

Calculating module `-92`

First obtaining unit `-921`

Second obtaining unit `-922`

Second obtaining module `-93`

First feedback content obtaining module `-94`

Second feedback content obtaining module `-95`

FIG. 9

First obtaining module `-101`

Normalizing module `-102`

Combining module `-103`

Second obtaining module `-104`

FIG. 10

FIG. 11

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20060013250 A1
- US 20040208145 A1

- US 20050020237 A1